# EUROPÄISCHE PATENTSCHRIFT

(11) **EP 1 008 681 B1**
(45) Veröffentlichungstag und Bekanntmachung des Hinweises auf die Patenterteilung: **05.03.2003**
(21) Anmeldenummer: 99124472.4
(22) Anmeldetag: 08.12.1999
(51) Int. Cl.: D03D 1/00, B60R 21/18

(54) **Zweilagiges Gurtband und Verfahren zu dessen Herstellung**
Double-layer belt and process for its manufacture
Sangle à deux couches et son procédé de fabrication

(30) Priorität: 10.12.1998 DE 19857034
(43) Veröffentlichungstag der Anmeldung: 14.06.2000
(73) Patentinhaber: Berger, Johann, D-73553 Alfdorf (DE)
(72) Erfinder: Berger, Johann, 73553 Alfdorf (DE); Märtz, Josef, 85386 Eching (DE); Georgi, Constantin, 73660 Urbach (DE)
(74) Vertreter: Fischer, Matthias, Dipl.-Ing.

(56) Entgegenhaltungen:
- DE-A- 2 008 048
- DE-A- 19 804 378

## Beschreibung

Die Erfindung betrifft ein zweilagiges Gurtband, insbesondere für Sicherheitsgurte von Kraftfahrzeugen und ein Verfahren zu dessen Herstellung.

Zweilagige Gurtbänder werden zur Aufnahme von entfaltbaren aufblasbaren Geweben (Luftkissen) verwendet.

Aus der DE-PS 20 08 048 (Rutzki) ist beispielsweise ein Sicherheitsgurtband bekannt, das als Schlauch ausgebildet ist und eine eingenähte Reißfalte aufweist, die so ausgebildet ist, daß sie bei einer Kollision durch vom Gurt ausgeübte Zugkräfte aufreißt und das Öffnen eines damit gekoppelten Ventils das Aufblasen des Schlauchgurtes bewirkt. Hierdurch wird der vor dem Unfall als Flachschlauch liegende Gurt, dessen Breite dem halben Umfang des aufgeblasenen Gurtes entspricht, schlagartig aufgeblasen. Er stellt dadurch ein gewisses, gegenüber dem einfachen Gurt vorteilhaftes, Aufprallkissen dar. Die Herstellung der dort beschriebenen Reißfalte ist jedoch zeit- und kostenaufwendig.

Es ist eine Aufgabe der Erfindung, ein zweilagiges Gurtband und ein Verfahren zu dessen Herstellung vorzuschlagen, das kostengünstig herzustellen und ökonomisch durchzuführen ist.

Die Aufgabe wird gelöst durch ein Verfahren gemäß Anspruch 1 und ein Gurtband gemäß Anspruch 4. Es ist mit diesem Verfahren möglich, ein Gurtband durch Weben so herzustellen, daß eine Reißnaht während des Webvorganges mit einem vernachlässigbaren Zeitaufwand hergestellt wird. Ein bisher üblicher Verfahrensschritt "Herstellen einer Reißnaht" und die entsprechende Vorrichtung entfällt. Das gewebte Gurtband kann über eine einfache Umlenkvorrichtung umgeformt und thermofixiert werden, so daß sich wesentlich zeit- und kostengünstiger als bisher ein zweilagiges Gurtband mit einer Reißnaht herstellen läßt.

In einer vorteilhaften Weiterbildung des erfindungsgemäßen Verfahrens wird als Schußfaden in beiden Gewebelagen (obere Lage O und untere Lage U) ein Multifil-Schußfaden und zusätzlich in einer oder beiden Gewebelagen (obere Lage O und/oder untere Lage U) ein Monofil-Schußfaden verwebt, wobei der Monofil-Schußfaden im Mittelbereich auf der zur gegenüberliegenden Lage zeigenden Seite der Gewebelage(n) flottiert. Dadurch ergeben sich im fertigen Gurtband weiche Kanten bei gleichzeitig guter Quersteifigkeit.

Vorteilhafte Weiterbildungen der Erfindung sind den Unteransprüchen zu entnehmen.

Weitere Vorteile und Einzelheiten der Erfindung werden im folgenden kurz beschrieben und anhand einer Zeichnung erläutert.
- Figur 1: zeigt in einer schematischen Schnittdarstellung das gewebte Gurtband vor dem Umformen.
- Figur 2: zeigt in einer schematischen Schnittdarstellung das gewebte Gurtband nach dem Umformen.
- Figur 3: zeigt schematisch den Kettfadenverlauf beim Weben eines erfindungsgemäßen Gurtbandes auf einer Nadelband-Webmaschine.
- Figur 4: zeigt in einer schematischen Schnittdarstellung einen Ausschnitt des gewebten Gurtbandes nach dem Umformen, mit eingefügtem Luftkissensack.

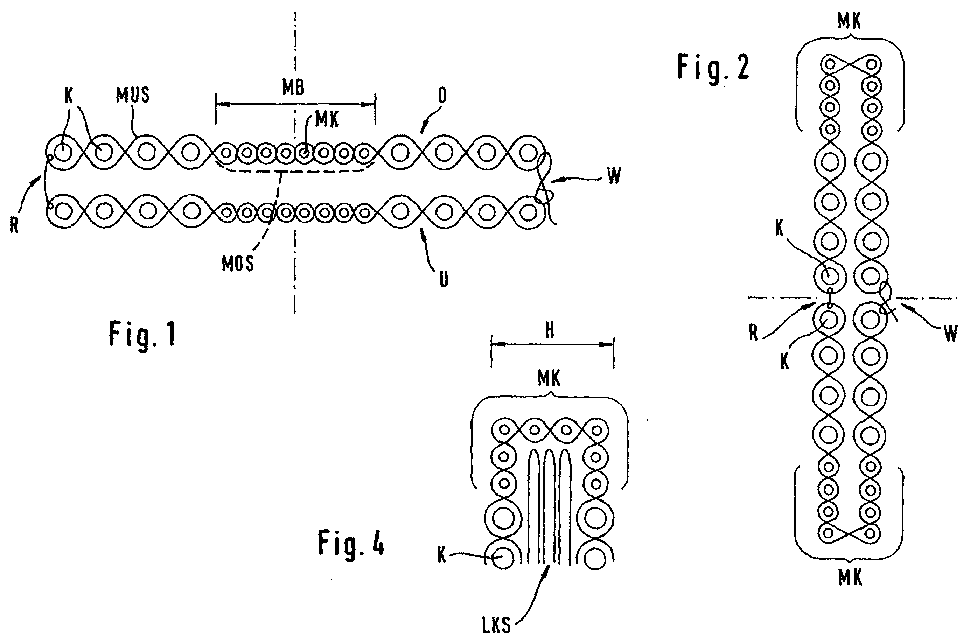

Figur 1 zeigt ein Gurtband, hergestellt nach dem erfindungsgemäßen Verfahren, beispielsweise auf einer Nadelband-Webmaschine. Eine obere Gewebelage O und eine untere Gewebelage U bilden zwischen sich einen Hohlraum, der zum späteren Aufnehmen eines Luftkissengewebes vorgesehen ist. Der Hohlraum ist auf der linken Seite von einer Reißnaht R und auf der rechten Seite durch eine Fangfaden- oder Wirkmaschenreihe W abgeschlossen. Kettfäden der beiden Gewebelagen O und U sind mit K bezeichnet und durch Kreise angedeutet. Im hier beispielhaft schematisch, aber nicht maßstabsgetreu, dargestellten Gurtband, in Kettrichtung geschnitten gezeichnet, ist ein Mittelbereich MB zu erkennen, in dem die dargestellten Kettfäden MK wesentlich feiner sind als die restlichen Kettfäden K. Dies gilt für die obere Lage O wie für die untere Lage U gleich. Die Anzahl der "groben" Kettfäden K - hier ist jeweils rechts und links des Mittelbereichs MB stellvertretend nur eine geringe Anzahl von vier groben Kettfäden dargestellt - ist wesentlich höher als die Zahl der feinen Kettfäden MK. Schlußendlich ergibt sich die Anzahl der Kettfäden aus der Wahl des Fadenmaterials für die gewünschte Gurtbandkonstruktion. Beispielsweise können die Kettfäden K die Feinheit von dtex 1100 haben. Hierzu passende feinere Mittenkettfäden MK können sich im Bereich zwischen dtex 280 bis 550 bewegen. Ein dazu passender Reißfaden könnte dann eine Feinheit zwischen dtex 50 und 280 haben. Der auf der Wirkseite vermaschte Fangfaden W sowie ein hierzu zusätzlich einsetzbarer Sperrfaden könnte etwa dieselbe Feinheit haben wie der Reißfaden R. Diese Verhältnisse haben sich als besonders vorteilhaft gezeigt. Die Erfindung ist jedoch nicht darauf eingeschränkt. Der Reißfaden R, auch auf dieser Seite als Fang- und Sperrfaden bezeichnet, wird zum Weben aus der Kettfadenlieferrichtung zugeführt und über die Schaftsteuerung mit verwebt. Der Wirk- oder Fangfaden W wird mit einer entsprechenden, dem Fachmann bekannten Wirknadeleinrichtung auf der (in Figur 1) rechten Seite vermascht. Auf Details dieser Webart oder Vermaschung wird hier nicht besonders eingegangen, da dies dem Fachmann aus dem Stand der Technik bekannt ist.

In einer vorteilhaften Weiterbildung desr erfindungsgemäßen Verfahrens wird als Schußfaden in beiden Gewebelagen (obere Lage O und untere Lage U) ein Multifil-Schußfaden MUS und zusätzlich in einer oder beiden Gewebelagen (obere Lage O und/oder untere Lage U) ein Monofil-Schußfaden MOS verwebt, wobei der Monofil-Schußfaden im Mittelbereich MB auf der zur gegenüberliegenden Lage zeigenden Seite der Gewebelage(n) flottiert. In der in Fig. 1 dargestellten oberen Gewebelage O erkennt man beispielsweise den auf der zur unteren Gewebelage U zeigenden (Unter-)Seite der oberen Gewebelage O - hier gestrichelt dargestellten - flottierenden Monofil-Schußfaden MOS. In der Ansicht von Fig. 1 "verschwindet" der Monofil-Schußfaden MOS außerhalb des Mittelbereichs MB gleichsam hinter dem Multifil-Schußfaden MUS. Die gleiche Konstruktion ist analog auch in der unteren Gewebelage U möglich.

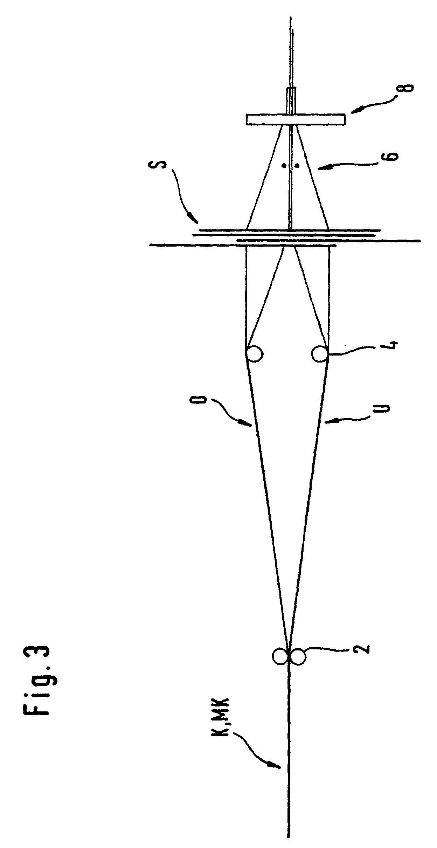

Figur 3 zeigt schematisch den Kettfadenverlauf in einer Nadelbandmaschine von der Seite, um einen kurzen Überblick über das Weben des Hohlgewebes zu geben. Von (in Figur 3) links werden die Kettfäden K und MK zugeführt, die sich nach den Kalanderrollen 2 aufteilen in die Kettfäden der oberen Lage O und die Kettfäden der unteren Lage U. Nach weiteren Umlenkwalzen 4 ist die hier durch vier Schäfte S symbolisch dargestellte Schaftsteuerung zu erkennen, deren Litzen die Kettfäden der oberen Lage O und der unteren Lage U jeweils führen, um das entsprechend gewünschte Webfach zu öffnen. Die hier dargestellte Situation befindet sich auf einer Doppelnadelband-Webmaschine. Man erkennt die als zwei schwarze Punkte im Schnitt dargestellten jeweils in einem Fach für die obere Lage O und die untere Lage U positionierten Schußnadeln 6. Man kann das erfindungsgemäße Verfahren selbstverständlich auch auf einer Einzelnadelband-Webmaschine herstellen. Auch kann auch mit jeder Schußnadel für sich beispielsweise einen Monofilfaden und einen Multifilfaden gleichzeitig einführen. Hier sind sämtliche Konfigurationen denkbar, die dem Fachmann jedoch aus dem Stand der Technik bereits bekannt sind. Ein Riet 8 schlägt nach jedem Schußeintrag auf die bereits gewebte Ware und gibt das Fach wieder für den erneuten Schußeintrag frei. Das Verfahren kann auch auf einer Jaquard- oder Schützenwebmaschine durchgeführt werden.

Figur 2 zeigt das erfindungsgemäße Gurtband nach dem Verfahrensschritt "Umformen des Bandes". Dadurch ist die Reißnaht im Bereich einer nun in Figur 2 waagrecht verlaufenden Mittelsymmetrielinie zu finden. Die Reißnaht bzw. der Reißfaden R ist aufgrund seiner gegenüber der "groben" Nachbarkette K hohen Feinheit gut zwischen den beiden benachbarten Kettfäden K eingebettet und somit gegenüber Scheuereinwirkungen von außen gut geschützt. Dasselbe trifft zu für die jetzt direkt benachbart gegenüberliegende Wirkmaschenreihe W. Die feinen Mittelbereichkettfäden MK bilden nun in der in Figur 2 dargestellten umgeformten Konfiguration des erfindungsgemäßen Bandes die neuen Kanten des Gurtbandes, die, da die Mittelbereichkettfäden sehr fein sind, eine weiche Kante für das Gurtband ergeben.

In Fig. 4 ist eine schematische Schnittdarstellung eines Ausschnitts des gewebten Gurtbandes nach dem Umformen gezeigt. Man erkennt gefaltete Gewebelagen LKS eines Randabschnitts eines eingefügten Luftkissensacks. Da das Material der Gewebelagen LKS des Luftkissensacks zwischen den Lagen des Gurtbandschlauches "auftragen", ergeben sich eine "Höhe" H, bzw. Seiten"wände" des Gurtbandschlauches, die von den feinen Kettfäden MK gebildet werden.

Nicht weiter dargestellt, jedoch erwähnt werden soll der weitere erfindungsgemäße Schritt, nämlich das Thermofixieren des Bandes im in Figur 2 dargestellten Umformzustand. Hierzu wird das umgeformte Band durch eine dem Fachmann bekannte Thermofixiereinrichtung hindurch geführt und entsprechend der zueinander eingestellten Relativgeschwindigkeiten der Kalanderwalzen unter Wärmeeinwirkung verstreckt (oder geschrumpft) und fixiert. Der dann fertiggestellte Gurtbandschlauch kann je nach Bedarf mit einem entsprechenden Luftkissensack gefüllt werden. Dabei besteht die vorteilhafte Möglichkeit, die "neuen" weichen Kanten des Gurtbandes, so anzuordnen, daß eine dickere Packung eines mehrlagigen (z.B. gefalteten) Luftkissens bequem zwischen die obere und untere Lage des Gurtbandschlauchs eingefügt werden kann. Der erfindungsgemäße Gurtbandschlauch bekommt dadurch, abhängig davon, wieviel ein eingefügter Luftkissensack aufträgt, eine gewisse "Höhe". Die aufgrund der feineren Kettfäden entstandenen weichen Kanten des Gurtbandes schmiegen sich so um das Material des eingelegten Luftkissensacks, daß dieses im Kantenbereich ausreichend Platz findet und es nicht zum Aufbauschen des gefüllten Gurtbandschlauches kommt.

Der Gurtbandschlauch wiederum kann zusätzlich je nach Wunsch des jeweiligen Sicherheitsgurtmodul-Herstellers mittels zusätzlichen festen Fäden oder Aufreißfäden "im Inneren" des Schlauchbandes befestigt werden, so daß sich das im erfindungsgemäßen Gurtbandschlauch untergebrachte Luftkissen bei der Explosion nicht vom Gurtband selbst entfernen und davon getrennt bewegen kann. Unabhängig von einer derartigen Naht wird der Luftsack in der Regel zumindest an den jeweiligen Enden oder Umschlagpunkten des Gurtbandes befestigt.

Der besondere Vorteil des erfindungsgemäßen Verfahrens liegt an der kostengünstigen Herstellungsart. Die durch herkömmliches Weben und das erfindungsgemäße Umformen des gewebten Gurtbandes gesteuerte Plazierung des Reißfadens R an seiner funktional richtigen Stelle und doch vor äußerem Einfluß gut geschütztem Ort hat sich als sehr vorteilhaft erwiesen. Die Ausführung der Erfindung ist nicht auf das geschilderte Ausführungsbeispiel beschränkt. Sämtliche Abänderungen und Modifikationen im Umfang des Schutzbereichs der Ansprüche werden mit abgedeckt.

## Patentansprüche

1. Verfahren zur Herstellung eines zweilagigen Gurtbandes, **gekennzeichnet durch** die Schritte
1.1) Weben eines zweilagigen Gurtbandes, mit folgenden Merkmalen:
a) beide Gewebelagen (O, U) weisen in der Bandmitte zwischen der linken Bandhälfte und der rechten Bandhälfte einen schmalen Mittelbereich (MB) auf, in dem die Kettfäden feiner als die restlichen Kettfäden sind,
b) die beiden äußeren Ränder der oberen Lage O und der unteren Lage U des Bandes werden so miteinander verbunden, daß die Ränder der einen Bandhälfte mit einem im wesentlichen in Kettfadenrichtung laufenden feinen Reißfaden zu einer Reißnaht verwebt werden und die Ränder der anderen Bandhälfte mit einem Fangfaden, und insbesondere zusätzlich mit einem Sperrfaden vermascht werden,
1.2) Umformen des Bandes, indem die beiden Gewebelagen (O, U) jeweils im Mittelbereich (MB) so weit auseinandergezogen werden, daß die ehemaligen linken Bandhälften (LBH) jeweils um etwa 90° gedreht in einer neuen, linken Ebene (L) zu liegen kommen und die ehemaligen rechten Bandhälften (RBH) ebenfalls jeweils um etwa 90° gedreht in einer neuen, rechten Ebene (R) zu liegen kommen und an der neuen, linken Ebene (L) anliegen, so daß die Reißnaht der linken Ebene (L) neben den Fangfadenmaschen der rechten Ebene (R) liegt und so das Band in einen Umformzustand gebracht wird,
1.3) Thermofixieren des Bandes im Umformzustand.

2. Verfahren nach Anspruch 1, **dadurch gekennzeichnet, daß** das Gurtband im Rapport gewebt wird, so daß immer eine bestimmte Gurtbandlänge etwas breiter gewebt wird, als das übrige Gurtband.

3. Verfahren nach Anspruch 1 oder 2, **dadurch gekennzeichnet, daß** als Schußfaden in beiden Gewebelagen (O, U) ein Multifil-Schußfaden (MUS) und zusätzlich in einer oder beiden Gewebelagen (O, U) ein Monofil-Schußfaden (MOS) verwebt wird, wobei der Monofil-Schußfaden (MOS) im Mittelbereich MB auf der zur gegenüberliegenden Lage zeigenden Seite der Gewebelage(n) flottiert.

4. Zweilagiges Gurtband, insbesondere hergestellt nach dem Verfahren gemäß Anspruch 1, 2 oder 3, **dadurch gekennzeichnet, daß** die beiden Lagen (O, U) in den Randbereichen des Gurtbandes feinere Kettfäden (MK) als im restlichen Gurtband aufweisen und miteinander verbunden sind, und daß eine der beiden Lagen (O, U) in der Bandmitte eine Reißnaht (R) aufweist.

5. Zweilagiges Gurtband nach Anspruch 4, **dadurch gekennzeichnet, daß** die Kettfäden (MK) im Bereich von Seitenflächen des Gurtbandes übereinander angeordnet sind, um ausreichend Platz für einen einzulegenden Luftkissensack zu bieten.

## Claims

1. A method of fabricating a two-ply webbing comprising the steps:
1.1) weaving a two-ply webbing having the following features:
a) both fabric plies (O,U) comprising in the middle of the webbing between the left-hand and right-hand webbing half a narrow middle portion (MB) in which the warp threads are finer than the remaining warp threads,
b) the two outer edges of the upper ply O and lower ply U of the webbing being interconnected so that the edges of the one webbing half are woven with a fine burst thread running substantially in the direction of the warp thread into a burst seam and the edges of the other webbing half being looped with a tuck thread, more particularly in addition with a seal thread
1.2) reconfiguring the webbing by splaying each of the two fabric plies (O,U) in the middle portion (MB) sufficiently so that the former left-hand webbing halves (LBH) are each turned through roughly 90° to locate in a new, left-hand plane (L) and the former right-hand webbing halves (RBH) are each turned through roughly 90° to locate in a new, right-hand plane (R) in adjoining the new, left-hand plane (L) so that the burst seam of the left-hand plane (L) is located alongside the tuck thread loops of the right-hand plane (R) in thus bringing the webbing into a reconfigured condition,
1.3) thermosetting the webbing in its reconfigured condition.

2. The method as set forth in claim 1, **characterized in that** the webbing is woven in repeat so that always a certain length of the webbing is woven somewhat wider than the remaining webbing.

3. The method as set forth in claim 1 or 2, **characterized in that** a multifil weft thread (MUS) is woven as the weft thread in both fabric plies (O, U) and, in addition, a monofil weft thread (MOS) in one of the two fabric plies (O, U), the monofil weft thread (MOS) being floated in the middle portion at the side of the fabric ply(plies) facing the opposite ply.

4. A two-ply webbing, more particularly fabricated by the method as set forth in claim 1, 2 or 3, **characterized in that** the two plies (O, U) comprise in the edge portions of the webbing finer warp threads (MK) than in the remaining webbing in being interconnected and that one of the two plies (O, U) comprises in the middle of the webbing a burst seam (R).

5. The two-ply webbing as set forth in claim 4, **characterized in that** the warp threads (MK) are arranged one above the other in the region of the side surfaces areas of the webbing to offer adequate room for an air bag to be inserted therein.

## Revendications

1. Procédé de fabrication d'une sangle à deux couches, **caractérisé par** les étapes :
1.1) Tisser une sangle à deux couches comportant les caractéristiques suivantes :
a) les deux couches de tissu présentent au milieu de la bande entre la moitié gauche de la bande et la moitié droite de la bande une zone médiane étroite (MB) dans laquelle les fils de chaîne sont plus fins que le reste des fils de chaîne,
b) les deux bords extérieurs de la couche supérieure O et de la couche inférieure U de la bande sont reliés entre eux de manière à ce que les bords de l'une des moitiés de bande sont tissés entre eux en une couture de déchirure présentant un fil de déchirure fin s'étendant substantiellement en direction des fils de chaîne, et les bords de l'autre moitié de bande sont maillés au moyen d'un fil d'accrochage, et notamment un fil de blocage supplémentaire ;
1.2) transformation de la bande par l'extension des deux couches de tissu (O, U) dans leur zone médiane (MB) au point où les anciennes moitiés de bande gauches (LBH) sont chacune tournées d'environ 90°, venant à se coucher dans un nouveau plan gauche (L) et les anciennes moitiés de bande droites (RBH) sont également tournées chacune d'environ 90°, venant à se coucher dans un nouveau plan droit (R) s'apposant au nouveau plan gauche (L) de manière à ce que la couture de déchirure du plan gauche (L) se trouve à côté des mailles de fil d'accrochage du plan droit (R), amenant de la sorte la bande dans un état de transformation,
1.3) thermofixation de la bande dans l'état de transformation.

2. Procédé selon la revendication 1, **caractérisé en ce que** la sangle est tissée en présentant un rapport de manière à ce qu'une longueur de sangle déterminée est toujours tissée un peu plus large que le reste de la sangle.

3. Procédé selon les revendications 1 ou 2, **caractérisé en ce qu'**est tissé comme fil de trame dans les deux couches de tissu (O, U) un fil de trame multifil (MUS) et en plus dans une ou les deux couches de tissu (O, U) un fil de trame monofil (MOS), le fil de trame monofil (MOS) flottant dans la zone médiane (MB) du côté de la/des couche(s) de tissu dirigée(s) vers la couche opposée.

4. Sangle à deux couches, notamment fabriquée selon le procédé d'après les revendications 1, 2 ou 3, **caractérisée en ce que** les deux couches (O, U) présentent dans les zones de bord de la sangle des fils de chaîne plus fins (MK) que dans le reste de la sangle, qui sont reliés entre eux, et qu'une des deux couches (O, U) présente au milieu de la bande une couture de déchirure (R).

5. Sangle à deux couches selon la revendication 4, **caractérisée en ce que** les fils de chaîne (MK) sont disposés par superposition dans la zone de surfaces latérales de la sangle pour ménager suffisamment de place pour un sac de coussin gonflable à insérer.
